# FASCICULE DE BREVET EUROPEEN

(11) **EP 2 404 395 B1**
(45) Date de publication et mention de la délivrance du brevet: **08.02.2017**
(21) Numéro de dépôt: 10709900.4
(22) Date de dépôt: 24.02.2010
(51) Int. Cl.: H04B 17/21, H04B 17/318, H04W 84/18

(54) **MÉTHODE DE CALIBRATION D'UN TERMINAL A ANTENNE MULTISECTORIELLE ET TERMINAL D'UN RÉSEAU MAILLE**
VERFAHREN ZUR KALIBRIERUNG EINES ENDGERÄTS MIT MULTISEKTORANTENNE UND MESH-NETZWERKENDGERÄT
METHOD FOR CALIBRATING A TERMINAL WITH A MULTI-SECTOR ANTENNA, AND MESH NETWORK TERMINAL

(30) Priorité: 03.03.2009 FR 0951340
(43) Date de publication de la demande: 11.01.2012
(73) Titulaire: Thomson Licensing, 92130 Issy-les-Moulineaux (FR)
(72) Inventeur: ROBERT, Jean-Luc, F-92443 Issy-les-Moulineaux Cedex (FR); LOUZIR, Ali, F-92443 Issy-les-Moulineaux Cedex (FR); MINARD, Philippe, F-92443 Issy Les Moulineaux Cedex (FR); CHAMBELIN, Philippe, F-92443 Issy Les Moulineaux Cedex (FR)
(74) Mandataire: Novagraaf Technologies
(86) Numéro de dépôt international: PCT/FR2010/050308
(87) Numéro de publication internationale: WO 2010/100364

(56) Documents cités:
- WO-A1-2005/125047
- WO-A2-2007/103893
- WO-A2-2008/003022
- LEWENZ R ET AL: "Antenna array calibration for a multi-channel direction of arrival sounder" HIGH FREQUENCY POSTGRADUATE STUDENT COLLOQUIUM, 2001. 6TH IEEE 9-10 SEPT. 2001, PISCATAWAY, NJ, USA,IEEE, 9 septembre 2001 (2001-09-09), pages 119-124, XP010565682 ISBN: 978-0-7803-7118-7

## Description

La présente invention concerne une méthode de calibration d'un terminal comportant une antenne multisectorielle dans un réseau maillé. Elle concerne également un terminal d'un réseau maillé comportant une telle antenne multisectorielle et le réseau maillé reliant les différents terminaux entre eux.

Des terminaux comportant des multi_antennes ou des antennes multisecteurs sont utilisés notamment dans les dispositifs de type MiMo (Multiple Input_Multiple Output) aux standards 802.11 ou 802.16 et plus particulièrement dans le contexte des réseaux maillés (Mesh Networks) dans lequel l'utilisation d'antennes sectorielles autorise le routage des données vers les différents noeuds du réseaux par la technique de faisceaux formés (beamforming).

L'efficacité d'un système de terminaux est nettement améliorée en maximisant la capacité du canal de transmission grâce à l'utilisation d'antennes directives. En effet elles permettent de réduire de manière importante les interférences qui sont à l'origine de la chute brutale de la capacité des réseaux dès que ceux-ci atteignent une certaine densité ou niveau de trafic.

Les réseaux dits « ad hoc mobile » sont définis par des connections entre les noeuds d'un groupe de noeuds mobiles à travers un médium sans fil (wireless). Ces noeuds peuvent librement et dynamiquement s'auto-organiser et créer ainsi une topologie arbitraire et temporaire de réseaux dit « ad-hoc mobile », permettant ainsi aux terminaux de s'interconnecter.

Les réseaux maillés (mesh) sont construits sur un mélange de noeuds fixes et mobiles interconnectés par des liens sans fils « wireless ».

Dans le standard 802.11 un accès Internet est envisagé. Dans ce type de réseaux, seuls quelques noeuds (mesh nodes) possèdent une connexion directe à Internet, le reste des noeuds servant de point relais. En effet, au lieu de requérir un accès internet pour chaque point du réseau dans des zones ne possédant pas forcément d'infrastructure de communication, la technique du multibond (multi hopping) est utilisée et certains des noeuds jouent alors le rôle de routeur.

Un tel concept est basé sur l'utilisation de 2 systèmes radio distincts sur le même noeud de réseau, l'un servant pour l'application client par exemple sur le standard 802.11 g à 2.4GHz tandis que l'autre radio opérera sur le standard 802.11a dans la bande des 5GHz et participera au routage multibond du réseau maillé (backbone mesh network).

D'une part les réseaux maillés possèdent des liens entre canaux (co channel) dans un environnement cellulaire de taille réduite, d'autre part la structure MAC (Media Access Control) du 802.11 de type CSMA/CA (Carrier Sense Multiple Access with Collision Avoidance) conduit chaque liaison entre canaux à opérer en temps partagé afin d'éviter les collisions de paquets, il en résulte une très faible réutilisation spatiale et donc une capacité de transmission du réseau plus faible.

De plus l'utilisation d'antennes omnidirectionnelles permettant une liaison sans fils entre les noeuds est source d'interférences entre les noeuds adjacents.

D'autres part des concepts tels que les techniques d'antennes multiples dites techniques MiMo (Multiple input, multiple output) ou les antennes à faisceaux formés (Beamforming) sont utilisées.

Une architecture de réseau maillé est décrite dans le brevet US2007/0153817 et est représentée par la figure 1. Ce brevet revendique d'une part l'utilisation d'antennes double-bandes directionnelles à chaque noeud N qui permettent ainsi de réduire les interférences sur les noeuds adjacents. Les secteurs représentés en pointillés, sont positionnés en fonction des demandes de routage. Une méthode « multibonds » opérant simultanément sur les fréquences respectives de 2.4GHz et 5GHz est décrite. Ainsi avec ce dispositif, à chaque routage, il faut recalculer les différentes liaisons entre noeuds et déterminer le secteur de l'antenne le plus adapté par un balayage sectoriel. L'invention vise à remédier à ces inconvénients.

WO 2008/003022 A2 montre une méthode de calibration d'un terminal â antenne dans un réseau de diffusion maillé.

L'invention consiste en une méthode de calibration d'un terminal à antenne bi-bande multisectorielle dans un réseau de diffusion maillé comprenant au moins un autre terminal. Elle est caractérisée par les étapes de sélectionner un des secteurs de l'antenne du terminal à calibrer, réceptionner par le secteur sélectionné les signaux d'identification émis par chacun des autres terminaux présents du réseau ainsi que l'information de niveau du signal réceptionné et stocker dans la mémoire du terminal à calibrer, pour chaque secteur, les différents signaux d'identification des terminaux présents du réseau ainsi que les informations de niveau du signal réceptionné.
Dans un autre mode de réalisation, la sélection de chaque secteur d'antenne du terminal à calibrer se fait par commande d'un moyen de commutation associé à chaque secteur.
Préférentiellement cette méthode s'applique à tous les terminaux du réseau maillé.
Préférentiellement la calibration est répétée à intervalles réguliers.
L'invention consiste également en un terminal d'un réseau maillé comprenant au moins un autre terminal, et comportant une antenne multisectorielle.
Le terminal comporte également une mémoire pour mémoriser pour chaque secteur de l'antenne les signaux d'identification reçus qui sont émis par chacun des autres terminaux présents du réseau maillé ainsi que l'information de niveau du signal réceptionné permettant ainsi une calibration du terminal par rapport aux autres terminaux du réseau.

Préférentiellement l'antenne multisectorielle est bi bande.

Préférentiellement des moyens de commutation sont associés à chaque secteur d'antennes permettant ainsi la sélection successive de chaque secteur d'antenne.

Préférentiellement des filtres passe bande ou coupe bande sont associés à chaque secteur d'antennes.

L'invention consiste également en un réseau maillé formé par une pluralité de terminaux.

L'invention a l'avantage de permettre une sélection optimale d'un secteur de l'antenne d'un terminal lors de connections entre les terminaux d'un réseau maillé.
Les caractéristiques et avantages de l'invention mentionnée ci-dessus, ainsi que d'autres, apparaîtront plus clairement à la lecture de la description suivante, faite en relation avec les dessins joints, dans lesquels :

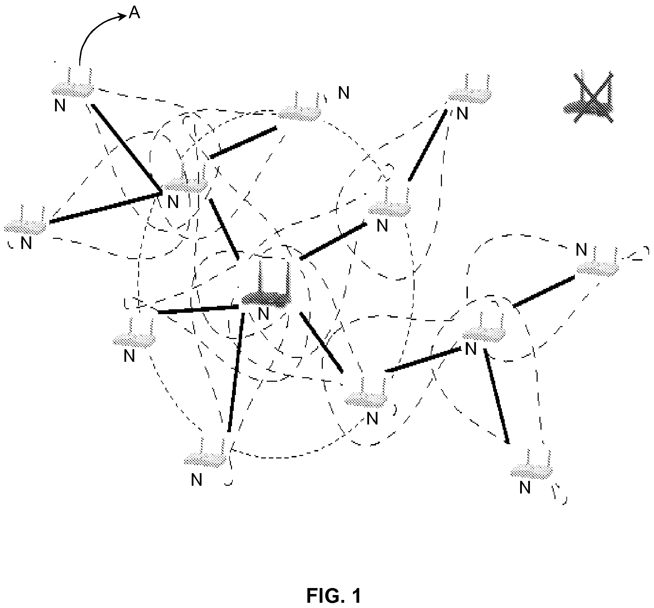

- La figure 1 déjà décrite, est une topologie d'un réseau maillé basé sur des antennes sectorielles ;
- La figure 2 représente une phase d'une méthode de calibration du réseau maillé selon l'invention ;
- La figure 3 représente une topologie d'une antenne double bande multisecteur
- Les figures 4a et 4b sont un exemple de réalisation des faces d'une antenne six secteurs de profil Vivaldi ;
- La figure 5 une configuration de transmission dans un réseau maillé selon l'invention.

Le principe de l'invention consiste à opérer une phase de calibration d'un réseau qui permet simultanément à chaque terminal (Access Point) localisé sur un noeud de réseau d'analyser sa configuration de réception en terme d'identification des terminaux présents dans son environnement et en terme de niveau reçu des terminaux identifiés, cette phase s'effectuera par un balayage séquentiel sur 360° des secteurs de l'antenne de ce terminal, les informations issues de ce balayage (scanning) sont stockées dans la mémoire de chacun des terminaux.

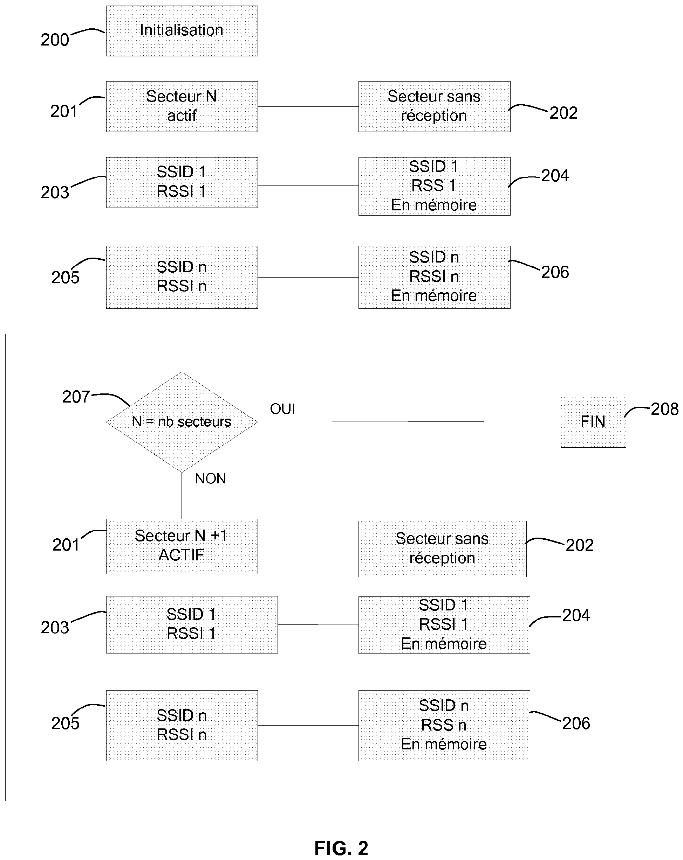

Ce procédé résumé sur le diagramme de la figure 2 est basé sur la réception par un terminal à calibrer des identificateurs SSID (Service Set Identifier), information incluse dans l'entête de paquets d'identification de réseau, envoyés par un autre terminal du réseau considéré.
Pour chacun des terminaux du réseau considéré, ces identifiants ainsi que l'information de niveau de signal RSSI (Received Signal Strength Indication) associé sont ainsi stockés en mémoire de chaque terminal.
Chaque terminal associé à chaque noeud possède donc une sorte de cartographie de son environnement en mémoire. Cette pseudo géolocalisation permet à chaque terminal de stocker en mémoire les identifiants voisins et leur niveau de puissance reçus au cours d'un balayage sectoriel de l'antenne

La précision de cette géolocalisation liée au critère de maximum de puissance reçue dépend de la granularité du balayage et donc de la directivité de l'antenne considérée qui est fonction du nombre de secteurs de l'antenne considérée.

Elle dépend également de l'environnement, néanmoins dans un environnement extérieur statique, le maximum de puissance reçue reste fortement corrélé à un trajet principal de transmission. Grâce à la cartographie enregistrée, un trajet principal de transmission est donc déterminé.

Dans le cas d'un environnement dense en terminaux, le faisceau ayant le maximum de puissance reçue n'est pas nécessairement celui dirigé vers le terminal émetteur car des interférences peuvent perturber la réception de signaux.

Il est important de répéter régulièrement la calibration pour s'adapter à tous changements d'environnement. Selon l'invention le procédé est répété à intervalles réguliers pouvant s'espacer lorsqu'une information de stabilité du réseau maillé est reçue. A l'inverse, tout changement d'environnement enregistré ou signalé entraîne automatiquement un recalibrage du réseau maillé.

Le diagramme de la figure 2 représente un exemple de calibration d'un terminal localisé sur un noeud d'un réseau maillé. Cette calibration commence donc par une première étape 200 d'initialisation du premier terminal à calibrer T0 du réseau. La nature de l'antenne de ce terminal ainsi que le nombre de secteurs, par exemple 6 secteurs, sont ainsi enregistrés. L'étape suivante 201 consiste à activer un des secteurs par exemple le secteur numéroté 1 et à analyser sa capacité de réception en terme d'identification des terminaux présents dans son environnement dans le réseau maillé et en terme de niveau reçu des terminaux identifiés. Au cours de l'étape 202, si aucune réception n'est possible, cette information de non réception est mémorisée en association avec le secteur activée de l'antenne considérée.
A l'inverse, les informations considérées sont par exemple basées sur la réception des identificateurs SSID (Service Set Identifier) inclus dans l'entête de paquets d'identification de réseau, envoyés par chaque terminal du réseau considéré.
Au cours des étapes 202 à 206, au terminal à calibrer et à un secteur de l'antenne sélectionné sont donc stockés en mémoire les informations d'identification de chacun des n autres terminaux considérés SSIDIà SSIDn, avec l'information de niveau de signal RSSI (Received Signal Strength Indication) RSSI1 à RSSIn correspondant aux différents terminaux du réseau. Cette phase se poursuivra par l'étape 207 correspondant à une commutation sur le secteur suivant de l'antenne du terminal à calibrer de façon à avoir une analyse séquentiel sur 360° des N secteurs de l'antenne de ce terminal. Les informations issues de ce balayage (scanning) sont ensuite stockées dans la mémoire de chacun des terminaux par les étapes correspondant aux étapes 202-206. Lorsque ces informations ont été enregistrées pour tous les N secteurs de l'antenne, alors la calibration est terminée, ce qui correspond à l'étape finale, étape 208.

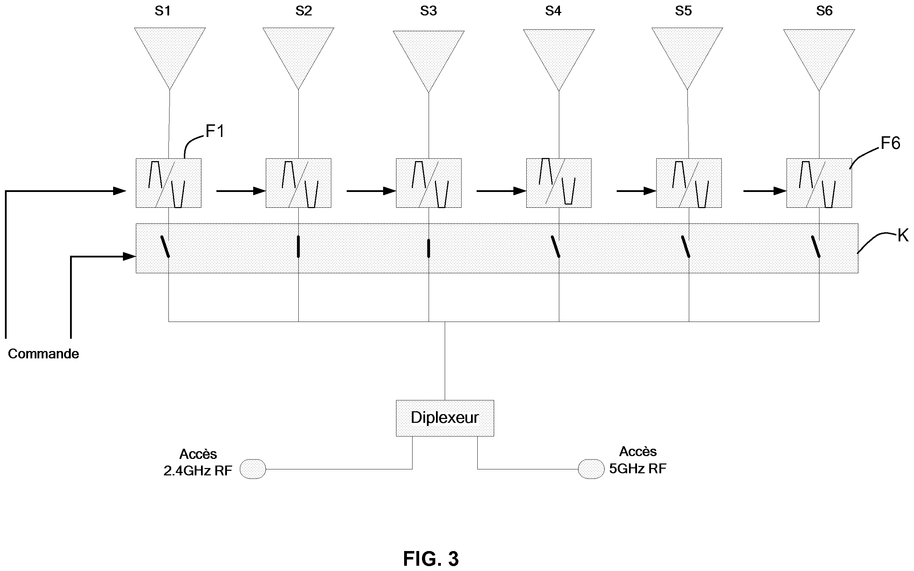

La figure 3 représente une topologie d'une antenne bi- bande multisecteur telle que par exemple utilisée par l'invention.

Cette antenne bi-bande comporte 6 secteurs S1-S6 par exemple. Elle pourrait en comporter un nombre différent, soit supérieur soit inférieur, dépendant de la densité et de la taille du réseau.
En effet plus le réseau est dense, plus il est intéressant d'avoir une sectorisation d'antenne importante.

Cette antenne sera préférentiellement planaire imprimée de type fente évasée (Vivaldi) ou dipôle ou Yagi par exemple, chacun des secteurs d'antenne pourra couvrir les 2 domaines fréquentiels visés par l'application, la bande 2.4GHz pour le service client ou la bande 5 GHz pour le service routage multi bonds. Un diplexeur permet d'assurer l'isolation bilatérale des signaux RF.

Chaque secteur de l'antenne est connectée au diplexeur par l'intermédiaire d'un filtre passe bande ou coupe bande adaptable F1-F6 associé à un commutateur K. Ce commutateur K permet par l'intermédiaire de signaux de commande d'autoriser la transmission ou la réception (Tx/Rx) du signal. Le signal est reçu par un secteur de l'antenne ou transmis par un ou plusieurs secteurs d'antenne simultanément. Ce commutateur K sera par exemple assuré soit par le biais de diode PIN ou d'un interrupteur AsGa.
Le filtre permet de réduire les interférences entre les différents canaux.
Les signaux dans la bande 2.4GHz et 5GHz sont donc reçus ou émis sur un des secteurs sur les accès RF 2.4GHz et 5GHz par l'intermédiaire d'un diplexeur. Les signaux de commande des filtres comme des commutateurs sont issus de l'organe de commande MAC (Médium Access Control).

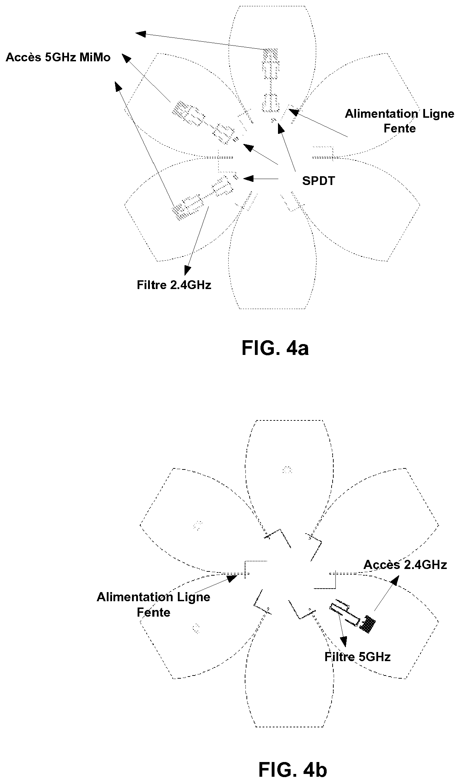

La figure 4 est un exemple de réalisation d'une antenne Vivaldi sectorisée correspondant à la topologie précédente.
Cette architecture d'antenne bi-bande regroupe au sein d'une seule antenne des accès RF large bande dans la bande 5GHz, une fonction de sectorisation dynamique pilotée par l'organe de commande MAC (Médium Access Control) permettant de bénéficier des gains de performances liés à la directivité, des accès RF dans la bande 2.4GHz, une fonction de sectorisation dynamique pilotée par l'organe de commande MAC (Médium Access Control), un dispositif d'alimentation sélectif en fréquence sur chacun des accès RF assure ainsi l'isolation nécessaire au fonctionnement simultané des blocs radios 2.4 et 5GHz.
Les accès 5GHz sont regroupés sur une des deux faces (figure 4a) de l'antenne multisecteur tandis que les accès 2.4GHz sont regroupés sur l'autre face (figure 4b). Des filtres de la bande 2.4GHZ sont associés aux accès 5GHz tandis que des filtres de la bande 5GHZ sont associés aux accès 2.4GHz. Ces filtres sont de préférence réalisés en technologie hyperfréquence ce qui leur permettra par un encombrement réduit de pouvoir s'insérer sur chaque accès RF.

L'invention envisage la possibilité de sélectionner simultanément plusieurs secteurs de l'antenne aux 2 fréquences de fonctionnement. Ainsi une émission dans plusieurs directions différentes est possible.

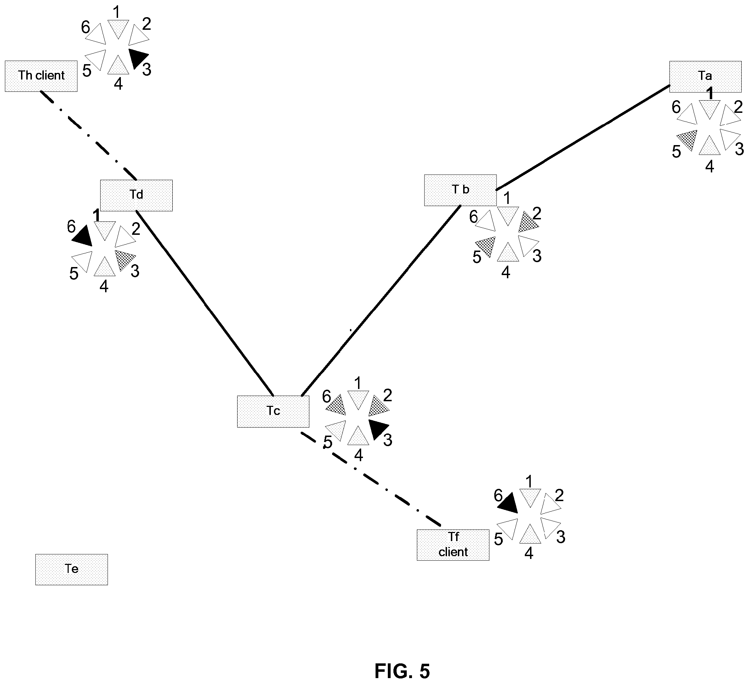

La figure 5 représente une configuration de transmission selon l'invention sur un tronçon de réseau.
A une demande d'accès internet correspondant au terminal Ta, par des terminaux Tf et Th correspondants aux clients f et h, un premier routage géré par l'organe de commande MAC s'organise via les terminaux Tb, Tc et Td. Chacun de ces terminaux Ta, Tb, Tc, Td, Te, Th et Tf opère alors un pré positionnement des antennes multi secteurs conforme au routage sollicité suite aux informations de calibration de chaque terminal.
Ainsi dans les informations de calibration du terminal Th, Il est mémorisé que la communication avec le terminal Td est optimisé par l'intermédiaire du secteur S3 de l'antenne multisectorielle à la fréquence requise de 2.4GHz. Les informations de calibration du terminal Tc permettent une gestion des liens de routage à 5GHz avec le terminal Tb par le secteur 2 d'antenne et avec le terminal Td par le secteur 6 et une gestion du lien client à 2.4GHz avec le terminal Tf par le secteur 3. L'antenne du terminal Tc gère donc conjointement les liens de routage avec les autres terminaux à 5GHz et le lien client avec le terminal Tf à 2.4GHz.

Il apparaît néanmoins que l'efficacité d'un tel concept en termes d'interférences dépend d'une part de la directivité des antennes, de la densité géographique du réseau mais également de la capacité d'isolation des secteurs adjacents. En effet les liens de routage opérant dans différents canaux de la même bande fréquentielle, il en ressort que malgré la sélection d'antenne, de l'énergie entre canaux puisse perturber la transmission. C'est pourquoi et en plus afin d'améliorer la sélectivité de transmission et donc de limiter les interférences inhérentes au manque de directivité et à l'isolation imparfaite des commutateurs à 5GHz, un dispositif de filtrage passe bande ou coupe bande sélectionnable a été inséré dans chacun des secteurs d'antennes, ainsi le fait d'affecter aux secteurs adjacents de ceux impliqués dans le routage un filtrestop bande à 5GHz permet dans un environnement cellulaire dense d'améliorer l'isolation de ceux-ci et donc d'effectuer une sélectivité angulaire complémentaire.

## Revendications

1. Méthode de calibration d'un terminal à antenne multisectorielle dans un réseau de diffusion maillé comprenant au moins un autre terminal, **caractérisé en ce que** la méthode comprend les étapes de :
sélectionner un des secteurs de l'antenne du terminal à calibrer ;
réceptionner par le secteur sélectionné les signaux d'identification émis par chacun des autres terminaux présents du réseau ainsi que l'information de niveau du signal associé; et
stocker dans la mémoire du terminal à calibrer, pour chaque secteur, les différents signaux d'identification des terminaux présents du réseau ainsi que les informations de niveau du signal réceptionné.

2. Méthode de calibration selon la revendication 1 **caractérisée en ce que** la sélection de chaque secteur d'antenne du terminal à calibrer se fait par commande d'un moyen de commutation associé à chaque secteur.

3. Méthode de calibration selon la revendication 1 **caractérisée en ce que** cette méthode s'applique à tous les terminaux du réseau maillé.

4. Méthode de calibration selon la revendication 1 **caractérisée en ce que** la calibration est répétée à intervalles réguliers.

5. Terminal d'un réseau maillé comprenant au moins un autre terminal, et comportant une antenne multisectorielle, **caractérisé en ce que** le terminal comporte également une mémoire pour mémoriser pour chaque secteur de l'antenne les signaux d'identification reçus qui sont émis par chacun des autres terminaux présents du réseau maillé ainsi que l'information de niveau du signal d'identification associé permettant ainsi un calibration du terminal par rapport aux autres terminaux du réseau.

6. Terminal d'un réseau maillé selon la revendication 5 **caractérisé en ce que** des moyens de commutation sont associés à chaque secteur d'antennes permettant ainsi la sélection successive ou consécutive de chaque secteur d'antenne.

7. Terminal d'un réseau maillé selon la revendication 5 **caractérisé en ce que** l'antenne multisectorielle est bi bande.

8. Terminal d'un réseau maillé selon la revendication 7 **caractérisé en ce que** des filtres passe bande ou coupe bande sont associés à chaque secteur d'antennes.

9. Réseau maillé formé par une pluralité de terminaux tel que défini dans les revendications 5 à 8.

## Patentansprüche

1. Verfahren zur Kalibrierung eines Endgeräts mit Multisektorantenne in einem vermaschten Verteilernetzwerk, das mindestens ein weiteres Endgerät umfasst, **dadurch gekennzeichnet, dass** dieses Verfahren die folgenden Etappen umfasst:
Auswahl eines der Sektoren der Antenne des zu kalibrierenden Endgeräts;
Empfang durch den ausgewählten Sektor der von jedem der anderen vorhandenen Endgeräte des Netzwerkes ausgesendeten Identifikationssignale sowie der Pegelinformation des verbundenen Signals; und
Abspeicherung, für jeden Sektor, der verschiedenen Identifikationssignale der vorhandenen Endgeräte des Netzwerkes sowie der Pegelinformation des erhaltenen Signals im Speicher des zu kalibrierenden Endgeräts.

2. Verfahren zur Kalibrierung nach Anspruch 1, **dadurch gekennzeichnet, dass** die Auswahl eines jeden Antennensektors des zu kalibrierenden Endgeräts durch Steuerung eines mit jedem Sektor verbundenen Schaltmittels erfolgt.

3. Verfahren zur Kalibrierung nach Anspruch 1, **dadurch gekennzeichnet, dass** dieses Verfahren auf alle Endgeräte des vermaschten Netzwerkes angewendet wird.

4. Verfahren zur Kalibrierung nach Anspruch 1, **dadurch gekennzeichnet, dass** die Kalibrierung in regelmäßigen Intervallen wiederholt wird.

5. Vermaschtes Netzwerkendgerät, das mindestens ein weiteres Endgerät umfasst, und eine Multisektorantenne umfasst, **dadurch gekennzeichnet, dass** das Endgerät ebenfalls einen Speicher umfasst, um für jeden Sektor der Antenne die empfangenen Identifikationssignale zu speichern, die von jedem der anderen vorhandenen Endgeräte des vermaschten Netzwerkes ausgesendet werden, sowie die Pegelinformation des verbundenen Identifikationssignals, und so eine Kalibrierung des Endgerätes in Bezug auf die anderen Netzwerkendgeräte ermöglicht.

6. Vermaschtes Netzwerkendgerät nach Anspruch 5, **dadurch gekennzeichnet, dass** die Schaltmittel mit jedem Antennensektor verbunden sind, wodurch die sukzessive oder aufeinanderfolgende Auswahl eines jeden Antennensektors ermöglicht wird.

7. Vermaschtes Netzwerkendgerät nach Anspruch 5, **dadurch gekennzeichnet, dass** die Multisektorantenne eine Dualband-Antenne ist.

8. Vermaschtes Netzwerkendgerät nach Anspruch 7, **dadurch gekennzeichnet, dass** Bandpass- oder Bandsperr-Filter mit jedem Antennensektor verbunden sind.

9. Vermaschtes Netzwerk, das durch eine Vielzahl von Endgeräten gebildet wird, wie es in den Ansprüchen 5 bis 8 definiert ist.

## Claims

1. Method for calibration of a terminal with a multi-sector antenna in a mesh broadcast network comprising at least one other terminal, **characterized in that** the method comprises steps for:
selecting one of the sectors of the antenna of the terminal to be calibrated,
receiving by the selected sector the identification signals transmitted by each one of the other terminals present of the network as well as the associated signal level information, and
storing in the memory of the terminal to be calibrated, for each sector, the different identification signals of the network terminals present as well as the items of received signal level information.

2. Method for calibration according to claim 1 **characterized in that** the selection of each antenna sector of the terminal to be calibrated is made by command of a switching means associated with each sector.

3. Method for calibration according to claim 1 **characterized in that** this method applies to all the terminals of the mesh network.

4. Method for calibration according to claim 1 **characterized in that** the calibration is repeated at regular intervals.

5. Terminal of a mesh network comprising at least one other terminal, and comprising a multi-sector antenna, **characterized in that** the terminal also comprises a memory to memorise for each antenna sector the identification signals received that are transmitted by each of the other terminals present in the mesh network as well as the information of the associated identification signal level thus enabling a calibration of the terminal with respect to the other terminals of the network.

6. Terminal of a mesh network according to claim 5 **characterized in that** switching means are associated with each antenna sector thus enabling the successive or consecutive selection of each antenna sector.

7. Terminal of a mesh network according to claim 5 **characterized in that** the multi-sector antenna is dual-band.

8. Terminal of a mesh network according to claim 7 **characterized in that** low-pass or notch filters are associated with each antenna sector.

9. Mesh network formed by a plurality of terminals as defined in claims 5 to 8.
